# EUROPEAN PATENT APPLICATION

(11) **EP 3 340 142 A1**
(43) Date of publication of application: **27.06.2018**
(21) Application number: 17210054.7
(22) Date of filing: 22.12.2017
(51) Int. Cl.: G06Q 20/20, G07G 1/00

(54) **SELF-SERVICE POINT-OF-SALE TERMINAL**

(30) Priority: 22.12.2016 JP 2016248766
(71) Applicant: Toshiba TEC Kabushiki Kaisha, Tokyo 141-8562 (JP)
(72) Inventor: NAITO, Hidehiro, Shinagawa-ku, Tokyo 141-8562 (JP)
(74) Representative: Takeuchi, Maya

(57) **Abstract**

A self-service point-of-sale terminal includes an image sensor configured to convert light into an electric signal, a light source to illuminate an imaging target, and a processor configured to cause the light source to blink and then remain turned on without blinking when an imaging target is within a predetermined range of the image sensor.

## Description

### FIELD

Embodiments described herein relate generally to a self-service POS terminal.

### BACKGROUND

In the related art, a self-service POS terminal is known. The self-service POS terminal is an apparatus for performing registration of commodity data, a payment process, and bagging of purchased commodities by a customer himself or herself.

Since the self-service POS terminal is an apparatus used by a customer, various kinds of efforts have been made to help a customer who has no experience using the self-service POS terminal, how to use the self-service POS terminal. However, since the self-service POS terminal is an apparatus in which various devices are integrated, there is still room for improvement.

In the related art, an apparatus in which a position of a scanner is indicated by providing an LED for guidance in the vicinity of the scanner is known. However, adding such a dedicated LED separately only for indicating a position of the scanner results in an undesirable cost increase.
To solve the above-cited problems, there is provided a self-service point-of-sale (POS) terminal, comprising: an image sensor configured to convert light into an electric signal; a light source to illuminate an imaging target; and a processor configured to cause the light source to blink and then remain turned on without blinking when an imaging target is within a predetermined range of the image sensor.

Preferably, the processor detects an input indicating a start of an imaging operation using the image sensor and cause the light source to start blinking upon detecting the input.

Preferably, the processor performs the imaging operation on the imaging target using the image sensor after the light source remains turned on without blinking.

The self-service POS terminal may further comprise: a detector configured to detect a distance of the imaging target from the image sensor. According to the present invention, the processor determines that the imaging target is within the predetermined range of the image sensor based on an output of the detector.

Preferably, the processor performs a preliminary imaging operation on the imaging target while the light source is blinking and determines that the imaging target is within the predetermined range of the image sensor based on a result of the preliminary imaging operation.

The self-service POS terminal may further comprise: a detector configured to detect a presence of a person, wherein the processor determines that the imaging target is within the predetermined range of the image sensor based on an output of the detector.

Preferably, the processor detects an input indicating an end of the imaging operation and causes the light source to turn off upon detecting the input.

The present invention further relates to a method of operating a light source of a self-service point-of-sale (POS) terminal, that turns on while imaging an object using an image sensor, comprising: controlling the light source to blink; determining whether or not the object is within a predetermined range of the image sensor; and when the object is determined to be within the predetermined range of the image sensor, controlling the light source to remain turned on without blinking.

The method may further comprise: detecting an input indicating a start of an imaging operation using the image sensor, wherein the light source is controlled to start blinking upon detecting the input.

The method may further comprise: imaging the object using the image sensor after the light source remains turned on without blinking.
The method may further comprise: detecting a distance of the object from the image sensor, wherein the object is determined to be within the predetermined range of the image sensor based on the detected distance.

The method may further comprise: performing a preliminary imaging operation on the object while the light source is blinking, wherein the object is determined to be within the predetermined range of the image sensor based on a result of the preliminary imaging operation.

The method may further comprise : detecting a presence of a person, wherein the object is determined to be within the predetermined range of the image sensor based on the detected presence of the person.

The method may further comprise: detecting an input indicating an end of the imaging operation; and controlling the light source to turn off upon detecting the input.

The present invention further relates to a non-transitory computer readable medium comprising instructions executable in a processor of a self-service point-of-sale (POS) terminal that includes an image sensor and a light source that turns on while imaging an object using the image sensor, wherein the instructions when executed in the processor perform the steps of: controlling the light source to blink; determining whether or not the object is within a predetermined range of the image sensor; and when the object is determined to be within the predetermined range of the image sensor, controlling the light source to remain turned on without blinking.

Preferably, the steps further comprise detecting an input indicating a start of an imaging operation using the image sensor, and the light source is controlled to start blinking upon detecting the input.

Preferably, the steps further comprise detecting a distance of the object from the image sensor, and the object is determined to be within the predetermined range of the image sensor based on the detected distance.

Preferably, the steps further comprise performing a preliminary imaging operation on the object while the light source is blinking, and the object is determined to be within the predetermined range of the image sensor based on a result of the preliminary imaging operation.

Preferably, the steps further comprise detecting a presence of a person, and the object is determined to be within the predetermined range of the image sensor based on the detected presence of the person.

Preferably, the steps further comprise:
detecting an input indicating an end of the imaging operation; and controlling the light source to turn off upon detecting the input.

### DESCRIPTION OF THE DRAWINGS

FIG. 1 is a perspective view illustrating an appearance of a self-service POS terminal according to an first embodiment.
FIG. 2 is a block diagram illustrating a hardware configuration of the self-service POS terminal.
FIG. 3 is a block diagram illustrating a functional configuration of the self-service POS terminal.
FIG. 4 is an example of a start screen displayed on a display.
FIG. 5 is a flowchart schematically depicting a process performed by a microcomputer.

### DETAILED DESCRIPTION

Embodiments provide a self-service point-of-sale (POS) terminal which enables a customer to easily notice a position of a scanner of the self-service POS terminal, without increasing components of the self-service POS terminal.

In general, according to one embodiment, a self-service POS terminal includes an image sensor configured to convert light into an electric signal, a light source to illuminate an imaging target, and a processor configured to cause the light source to blink and then remain turned on without blinking when an imaging target is within a predetermined range of the image sensor.

### First Embodiment

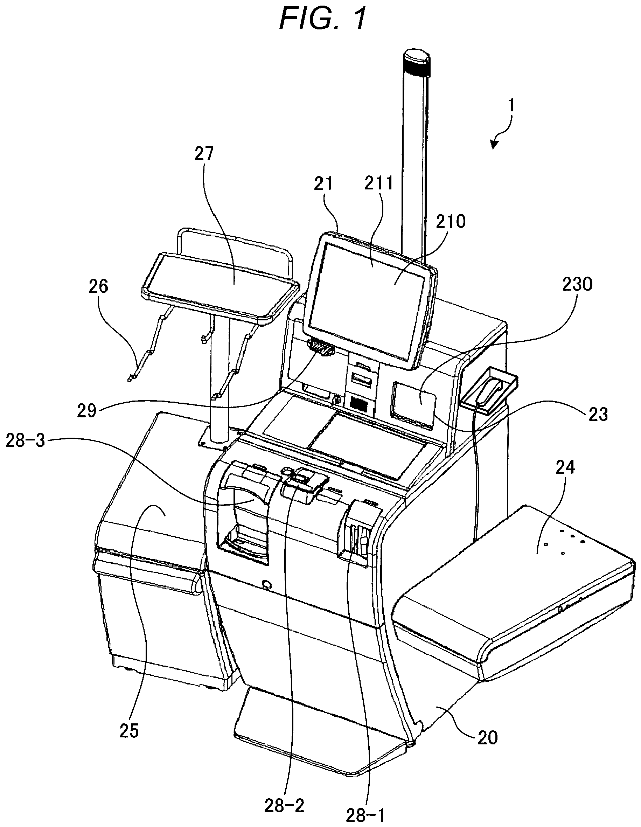

A first embodiment will be described with reference to the drawings. FIG. 1 is a perspective view illustrating an appearance of a self-service POS terminal 1 according to the first embodiment. For example, the self-service POS terminal 1 is installed in a store such as a supermarket. A main body 20 of the self-service POS terminal 1 includes a touch input type display 21 and a commodity reading unit 23 for reading an image of a commodity.

The touch input type display 21 includes a touch panel 210, a display device 211, and the like. For example, a liquid crystal display device is used as the display device 211. The touch panel 210 is provided by overlapping with a display screen of the display device 211. The display device 211 displays an operation guidance screen, various input keys for operations, or the like of the self-service POS terminal 1. The guidance screen includes a commodity selection screen in which candidates of a commodity recognized based on an image read by the commodity reading unit 23 is displayed, a settlement screen in which the total amount, a payment amount, a change amount, and the like with respect to the commodity on which sales registration is performed are displayed and a payment method is selected, or the like.

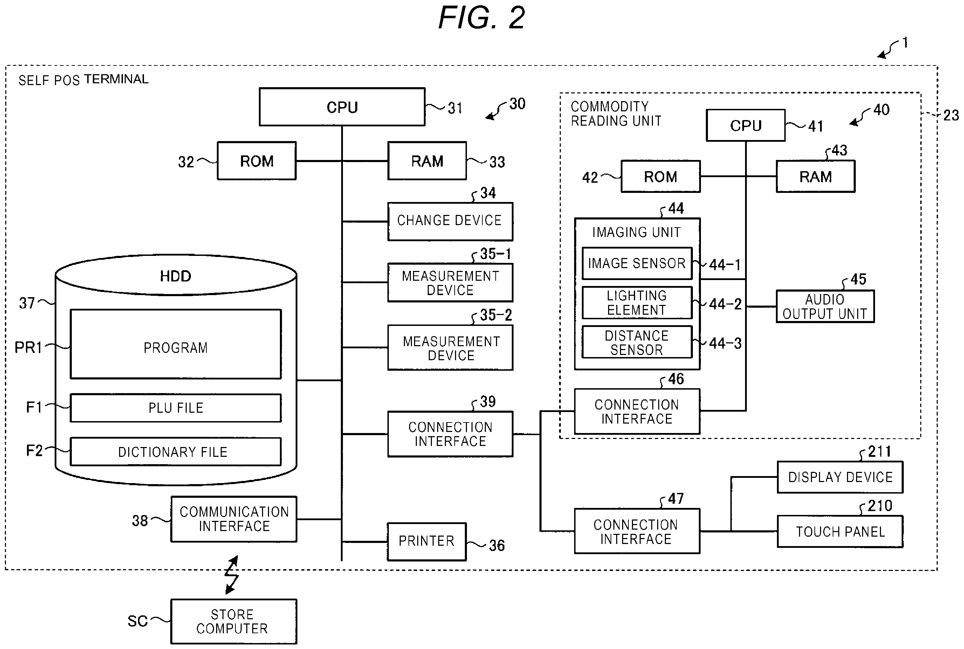

The commodity reading unit 23 includes an imaging unit 44 (see FIG. 2) at a back side of a reading window 230. When the commodity is positioned in front of the reading window 230 of the commodity reading unit 23, the commodity reading unit 23 causes the imaging unit 44 to image the commodity. The commodity reading unit 23 is electrically connected to the main body 20 by a connection interface 46 (see FIG. 2).

In addition, a commodity placing table 24 for placing commodities which have not yet been registered for settlement in a basket is provided on the right side of the main body 20 when viewed the self-service POS terminal 1 from front side. A commodity placing table 25 for placing registered commodities is provided on the left side of the main body 20 which is opposite to the commodity placing table 24 with respect to the main body 20. A bag hook 26 for hanging bags for putting the registered commodities and a temporary placing table 27 for temporally placing the registered commodities before putting them into the bags are provided on the commodity placing table 25. Weight measuring devices 35-1 and 35-2 (see FIG. 2) are provided on the commodity placing tables 24 and 25, respectively, and the tables have a function for confirming that a weight of the commodity is the same before and after the registration.

In addition, a bill depositing and dispensing port 28-1 for performing depositing of the bills for the settlement and dispensing of change bills, a coin insertion port 28-2 for inserting the coins at the time of the settlement, a coin port 28-3 for dispensing the change coins, and the like are provided in the main body 20 of the self-service POS terminal 1. In addition, a receipt issuing port 29 for issuing a receipt is provided in the main body 20.

A shopping basket brought in by the customer is placed on the commodity placing table 24. The commodities inside the shopping basket are picked up and moved into a shopping basket placed on the commodity placing table 25 for the registration by the customer. In this moving process of the commodities, when the customer positions the commodity on the reading window 230 of the commodity reading unit 23, the imaging unit 44 (see FIG. 2) disposed inside the reading window 230 images the commodity.

FIG. 2 is a block diagram illustrating a hardware configuration of the self-service POS terminal 1. The self-service POS terminal 1 includes a microcomputer 30 as an information processing unit that performs an information processing. The microcomputer 30 is configured by connecting, through a bus, a read only memory (ROM) 32 and a random access memory (RAM) 33 to a central processing unit (CPU) 31 that performs various computing processes and controls each unit in the self-service POS terminal 1.

A change device 34 including the bill depositing and dispensing port 28-1, the coin insertion port 28-2, and the coin port 28-3, and the weight measuring devices 35-1 and 35-2 that measure the weight of the commodity in the shopping basket placed on the commodity placing tables 24 and 25 are connected to the CPU 31. In addition, a printer 36 including the above-described receipt issuing port 29 is connected to the CPU 31. These are controlled by the CPU 31.

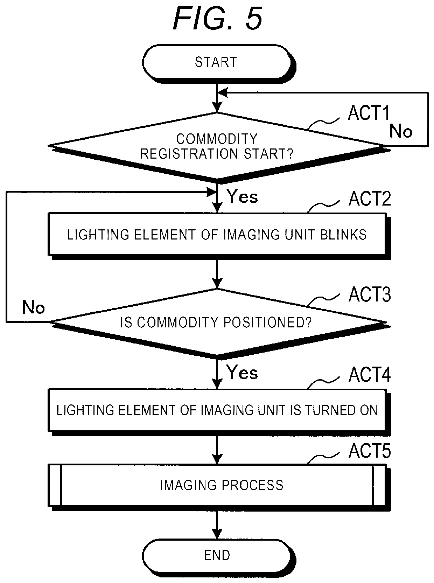

In addition, a hard disk drive (HDD) 37 is connected to the CPU 31. The HDD 37 stores programs or various files. All or a part of the programs or the various files stored in the HDD 37 are copied to the RAM 33, and executed by the CPU 31 at the time of activation of the self-service POS terminal 1. An example of a program stored in the HDD 37 is a program PR1 for carrying out the method depicted in FIG. 5. An example of a file stored in the HDD 37 is a PLU file F1 or a dictionary file F2 stored by being delivered from a store computer SC. In addition, a sales master file or the like is stored in the HDD 37. The HDD 37 may be a storage device, and may be a storage device configured with another storage medium such as a solid state drive (SSD) .

The PLU file F1 is a commodity file that stores information according to the sales registration with respect to the commodities to be sold by displaying in the store. The dictionary file F2 stores feature data of a plurality of commodities as verification data. When the feature data is calculated from an imaged commodity by the CPU 31, the CPU 31 compares each piece of the feature data of the imaged commodity with the feature data of the commodity stored in the dictionary file F2. Then, the degree of similarity between the feature data of the imaged commodity and the stored feature data of the commodity is calculated for the feature data of the imaged commodity for each commodity.

The PLU file F1 is a file that includes a commodity code (ID) and information (commodity data) relating to the commodity for each commodity. The dictionary file F2 is a file that includes each of the illustration image and the feature data for each commodity. The commodity code is identification information with which the commodity can be identified. The commodity data is information of a commodity classification to which the commodity belongs, a commodity name, a type of commodity, a unit price, or the like. The illustration image is, for example, an image indicating the commodity thereof.

A communication interface 38 for performing data communication with the store computer SC is connected to the CPU 31 through a bus. The store computer SC is installed in a backyard of the store or the like. The PLU file F1 to be delivered to the self-service POS terminal 1 is stored in a HDD of the store computer SC.

Furthermore, a connection interface 39 which can perform data communication with the commodity reading unit 23 or the touch input type display 21 is connected to the CPU 31 of the self-service POS terminal 1. The commodity reading unit 23, the touch input type display 21, and the like are connected to the connection interface 39.

The touch input type display 21 includes the touch panel 210, the display device 211, and a connection interface 47. The touch panel 210 and the display device 211 are electrically connected to the connection interface 39 through the connection interface 47.

The commodity reading unit 23 includes a microcomputer 40. The microcomputer 40 is configured by connecting a ROM 42 and a RAM 43 to a CPU 41 through a bus. A program executed by the CPU 41 is stored in the ROM 42. The imaging unit 44 and an audio output unit 45 are connected to the CPU 41. The imaging unit 44 and the audio output unit 45 are controlled by the CPU 41.

The imaging unit 44 includes an image sensor 44-1, a lighting element 44-2, and a distance sensor 44-3. The imaging unit 44 images the commodity at a predetermined frame rate from an inside of the reading window 230 under the control of the CPU 41. For example, the imaging unit 44 performs imaging of an image of 30 frames per second (fps) . Frame images (captured images) sequentially imaged at a predetermined frame rate by the imaging unit 44 are sequentially stored in the RAM 43.

The image sensor 44-1 is an imaging element that converts light into an electric signal. Specifically, for example, the image sensor 44-1 is a color CCD image sensor or a color CMOS image sensor. The lighting element 44-2 emits the light through the reading window 230 to illuminate an imaging target (commodity), and, specifically, for example, is a light emitting diode (LED). The distance sensor 44-3 is an example of a detection unit for detecting the imaging target that is present within a predetermined distance range. The distance sensor 44-3 outputs a value in accordance with a distance from the commodity positioned in front of the reading window 230, that is, an object (imaging target) that is present within a distance range which can be detected.

The audio output unit 45 includes an audio circuit, a speaker, or the like for generating audio, warning sound, or the like that is set in advance. The audio output unit 45 performs notification by the audio, the warning sound, or the like under the control of the CPU 41, and notifies that, for example, the commodity imaged by the imaging unit 44 is registered for settlement.

Furthermore, the connection interface 46 which can perform data communication with the CPU 31 is connected to the CPU 41 through a bus. The connection interface 46 is connected to the connection interface 39 of the main body 20.

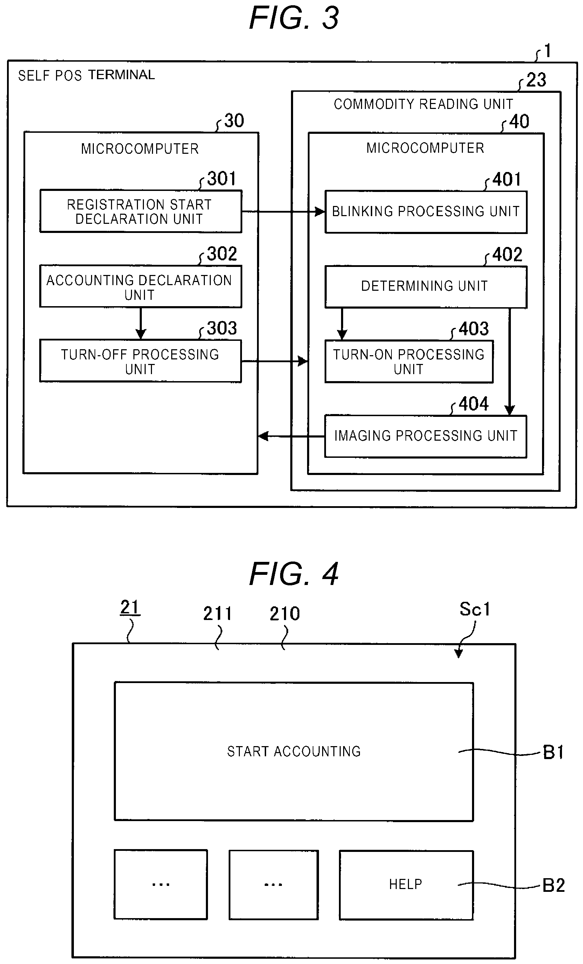

Next, a functional configuration of the self-service POS terminal 1 will be described. FIG. 3 is a block diagram illustrating a functional configuration of the self-service POS terminal 1. A solid line arrow in the drawing indicates a direction of an instruction. The CPU 31 executes a program such that the microcomputer 30 realizes functions as a registration start declaration unit 301, an accounting declaration unit 302, and a turn-off processing unit 303. The CPU 41 executes a program such that the microcomputer 40 realizes functions as a blinking processing unit 401, a determining unit 402, a turn-on processing unit 403, and an imaging processing unit 404.

The registration start declaration unit 301 receives an operation input to start a registration of the commodity data. Here, FIG. 4 is an example of a start screen Sc1 displayed on the display 21. The start screen Sc1 is a screen to be displayed by the microcomputer 30 according to a program, and a screen to be displayed on the display device 211 when the self-service POS terminal 1 is not operated by the customer. Various buttons to be operated by the customer such as a start button B1 and a help button B2 are displayed on the start screen Sc1, for example. When the help button B2 is selected, the microcomputer 30 causes the display device 211 to display a screen that guides a usage method of the self-service POS terminal 1 to the customer.

A character string and an illustration are drawn, on the start button B1, to guide that registration of the commodity data can be started by touching the start button B1. For example, the character string is "accounting start", "accounting will start when you touch here", or the like. When the operation input to select the start button B1 is received, the registration start declaration unit 301 determines that a declaration to start the registration of the commodity data is done and outputs a signal to start the registration of the commodity data to the commodity reading unit 23.

When the registration start declaration unit 301 receives the declaration, the blinking processing unit 401 causes the lighting element 44-2 to blink. A specific method for blinking the light from the lighting element 44-2 may be a well-known method, may be controlled by turning on or off using software, may be a method by a hardware circuit, or may be a combination thereof.

The determining unit 402 determines whether the imaging target is present within a distance range which is appropriate to image a commodity (hereinafter, referred to as "appropriate range") in which the image sensor 44-1 appropriately images an image. The determining unit 402 determines whether the object (imaging target) is present within the appropriate range based on a value output by the distance sensor 44-3.

When the determining unit 402 determines that the imaging target is present within the appropriate range, the turn-on processing unit 403 turns on the lighting element 44-2.

The imaging processing unit 404 performs an imaging process . That is, when the determining unit 402 determines that the imaging target is present within the appropriate range, the imaging processing unit 404 outputs an imaging turn-on signal to the imaging unit 44 to start the imaging of the commodity, obtains imaging data from an output of the image sensor 44-1, and outputs the captured image data to the microcomputer 30.

When the captured image data is received from the imaging processing unit 404, the microcomputer 30 recognizes and specifies the commodity positioned in front of the reading window 230 based on the imaging data referring to the dictionary file F2 and the PLU file F1. More specifically, the microcomputer 30 specifies an area in which the commodity is shown first from the imaging data and extracts the feature data of the area as a process for preparing an object recognizing process. Next, the microcomputer 30 presents a candidate of the commodity positioned in front of the reading window 230 by performing the object recognizing process.

Here, when it is briefly described, the object recognizing process is a process in which the degree of similarity between the feature data extracted from the imaging data and the feature data of each commodity in the dictionary file F2 is calculated and the commodity with a high degree of similarity becomes the candidate.

The degree of similarity is a numerical value indicating similarity of each commodity registered in the dictionary file F2 with respect to the commodity. As numerical value is high, the similarity of the commodity is high.

As an example of a calculation method of the degree of similarity, there are a method of calculating the similarity between the commodity and each commodity registered in the dictionary file F2 by absolute evaluation and a method of calculating it by relative evaluation.

When the degree of the similarity is calculated by the absolute evaluation, the microcomputer 30 compares the feature data extracted from the commodity and the feature data of the commodity in the dictionary file F2 one-on-one, and adopts the calculated degree of similarity as it is. Meanwhile, when the degree of similarity is calculated by the relative evaluation, the microcomputer 30 calculates the degree of similarity of each commodity so that the total sum of the degree of similarity of each commodity in the dictionary file F2 is 1.0 (100%).

It is assumed that one of which the degree of similarity exceeds a predetermined threshold based on a calculated result of the degree of similarity of each commodity becomes the commodity candidate.

Object recognition seen in the object recognizing process is called as generic object recognition. For the generic object recognition, various recognition technologies are described in the following documents.

Yanai Keiji, "The Current State and Future Directions on Generic Object Recognition", the Journal of the Information Processing Society, Vol. 48, No. SIG 16 [Searched on August 10, 2010], the Internet <URL: http://mm.cs.ue c.ac.jp/IPSJ-TCVIM-Yanai.pdf>.

In addition, a technology for performing the generic object recognition by segmenting an image into regions for each object is described in the following document.

Jamie Shotton et al., "Semantic Texton Forests for Image Categorization and Segmentation", [searched on August 10, 2010], the Internet <URL: http://citese erx.ist.psu.edu/viewdoc/download?doi=10.1.1.145.3036&re p=rep1&type=pdf>.

The microcomputer 30 causes the candidate of the commodity to be present by displaying elements (illustration images or the like) on the display device 211. When the touch panel 210 outputs a signal indicating that one of the elements is selected, the microcomputer 30 registers the commodity data corresponding to the selected element as the sales data.

The self-service POS terminal 1 also performs the commodity registration based on information read from a barcode attached to the commodity. The microcomputer 40 detects and decodes the barcode from the imaging data, and outputs the decoded information to the microcomputer 30. The microcomputer 30 registers the commodity data correlated with the commodity code matching the decoded information as the sales data.

The accounting declaration unit 302 receives an operation input as a declaration that the process transitions to the accounting process every time the commodity data is registered. The accounting process is a process of calculating a price based on the registered commodity data after completing the registration of the commodity data, and performing settlement of the payment. For example, the reception of the declaration transitioning to the accounting process is performed by displaying an accounting key on the display 21 when the commodity is registered. When the accounting key is selected by operation input, it is assumed that the accounting declaration unit 302 receives an operation input as a declaration that the registration of the commodity data is finished and the process transitions to the accounting process.

The turn-off processing unit 303 turns off the lighting element 44-2 during a period from a time when the accounting declaration unit 302 receives the operation input as the declaration transitioning to the accounting process to a time when the registration start declaration unit 301 receives the operation input as the declaration of the registration start of the commodity data. More specifically, when the accounting declaration unit 302 receives the operation input as the declaration transitioning to the accounting process, the turn-off processing unit 303 transmits a signal for instructing the turning off of the lighting element 44-2 to the microcomputer 40. The microcomputer 40 in which the signal is received turns off the lighting element 44-2.

The turn-off processing unit 303 may be implemented as a function realized by the microcomputer 40. In this case, the turn-off processing unit 303 directly acts on the lighting element 44-2 and turns off the lighting element 44-2.

An operation of the self-service POS terminal 1 in such a configuration will be described with reference to FIG. 5. FIG. 5 is a flowchart depicting a process performed by the microcomputer 40.

The microcomputer 30 causes the display device 211 to display the start screen Sc1 while the self-service POS terminal 1 is not operated by the customer, i.e., during the standby mode. When the customer operates the start button B1 on the start screen Sc1, the registration start declaration unit 301 outputs a signal to the microcomputer 40.

The microcomputer 40 waits for a signal from the registration start declaration unit 301 (No in Act 1). When the signal is received from the registration start declaration unit 301 (Yes in Act 1), the microcomputer 40 causes the light from the lighting element 44-2 by the blinking processing unit 401 (Act 2). As the light from the lighting element 44-2 blinks, the blinking light is emitted from the reading window 230.

Next, the microcomputer 40 waits that the commodity is positioned in front of the reading window 230. In the standby mode, the microcomputer 40 causes the lighting element 44-2 to keep blinking (No in Act 3). When the determining unit 402 determines that the imaging target is present within the appropriate range, the microcomputer 40 determines that the commodity is positioned in front of the reading window 230 (Yes in Act 3).

Then, the microcomputer 40 controls the turn-on processing unit 403 to switch the blinking of the light from the lighting element 44-2 in the imaging unit 44 to a turn-on state (Act 4), and controls the imaging processing unit 404 to start the imaging process (Act 5).

In association with the imaging process, the candidate of a commodity is displayed on the display device 211. The accounting declaration unit 302 causes the accounting key to be displayed on the display 21 and receives the declaration transitioning to the accounting process when the commodity is registered. When the accounting key is operated, the microcomputer 30 determines that there is the declaration transitioning to the accounting process and finishes the registration of the commodity data, and the process transitions to the accounting process. When the accounting declaration unit 302 receives the declaration, the turn-off processing unit 303 turns off the lighting element 44-2 by instructing to the microcomputer 40.

As described above, according to the first embodiment, since a position of the commodity reading unit 23 is indicated by emitting the blinking light from the reading window 230 in accordance with starting of the commodity registration, it is possible for the customer to easily notice the position of the commodity reading unit 23. By blinking the light emitted from the reading window 230, it is possible to easily notice, that is, to shorten a time to notice as compared with a case of turning on the light without blinking.

In the first embodiment, the detection unit is described as the distance sensor 44-3, but the detection unit may be a human sensor that detects the presence of a person within a predetermined distance range upon implementations.

### Second Embodiment

A second embodiment will be described. The embodiment is a modification example of the first embodiment. In the second embodiment, explanations of portions similar to those of the first embodiment will be omitted, and portions different from the first embodiment will be described. In this embodiment, the same reference numerals are used for the same parts as in the first embodiment.

The self-service POS terminal 1 according to the second embodiment does not include the detection unit (distance sensor 44-3) in the imaging unit 44. Instead, the determining unit 402 according to the embodiment performs determination based on an output of the image sensor 44-1 while the blinking processing unit 401 causes the lighting element 44-2 to blink, not based on a value output from the detection unit.

Even if the light from the lighting element 44-2 blinks, the image sensor 44-1 can capture light reflected by an object illuminated by the blinking light, and output an electric signal. In this case, it is assumed that the number of frames per unit time to be captured is reduced as compared with a case where the lighting element 44-2 is turned on. However, if an imaging target is imaged in a state satisfying a predetermined level in an analyzed result of the imaging data, it is possible to determine that there is the imaging target within the appropriate range.

The determining unit 402 determines that the imaging target is present within the appropriate range based on the output of the image sensor 44-1 while the blinking processing unit 401 blinks the light from the lighting element 44-2. The operations of the turn-on processing unit 403 and the imaging processing unit 404 receiving the determination of the determining unit 402 are the same as those of the first embodiment.

According to the second embodiment, since a configuration in which the detection unit is omitted as compared to the first embodiment is implemented, it is possible to further realize the reduction of cost.

A program executed in the sales data processing apparatus according to the embodiment is provided by being incorporated in the ROM or the like in advance.

The program executed in the sales data processing apparatus according to the embodiment may be configured to be provided by recording the program in a computer-readable recording medium such as a CD-ROM, a flexible disk (FD), a CD-R, and a digital versatile disk (DVD), in a file of an installable format or an executable format.

Furthermore, the program executed in the sales data processing apparatus according to the embodiment may be configured by storing the program on a computer connected to a network such as the Internet, and by downloading the program through the network. In addition, the program executed in the sales data processing apparatus according to the embodiment may be configured by providing or distributing the program through the network such as the Internet.

The program executed in the sales data processing apparatus according to the embodiment has a module configuration including the above-described units (registration start declaration unit 301, blinking processing unit 401, determining unit 402, turn-on processing unit 403, imaging processing unit 404, accounting declaration unit 302, and turn-off processing unit 303). The CPUs 31, 41 execute a program by reading the program from the storage medium such that the above-described units are loaded into RAM 33, 43 for execution by the CPUs. With this, the registration start declaration unit 301, the blinking processing unit 401, the determining unit 402, the turn-on processing unit 403, the imaging processing unit 404, the accounting declaration unit 302, and the turn-off processing unit 303 are realized.

While certain embodiments have been described, these embodiments have been present by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. A self-service point-of-sale (POS) terminal, comprising:
an image sensor configured to convert light into an electric signal;
a light source to illuminate an imaging target; and
a processor configured to cause the light source to blink and then remain turned on without blinking when an imaging target is within a predetermined range of the image sensor.

2. The self-service POS terminal according to claim 1, wherein
the processor detects an input indicating a start of an imaging operation using the image sensor and cause the light source to start blinking upon detecting the input.

3. The self-service POS terminal according to claim 1 or 2, wherein
the processor performs the imaging operation on the imaging target using the image sensor after the light source remains turned on without blinking.

4. The self-service POS terminal according to any one of claims 1 to 3, further comprising:
a detector configured to detect a distance of the imaging target from the image sensor,
wherein the processor determines that the imaging target is within the predetermined range of the image sensor based on an output of the detector.

5. The self-service POS terminal according to any one of claims 1 to 4,
wherein the processor performs a preliminary imaging operation on the imaging target while the light source is blinking and determines that the imaging target is within the predetermined range of the image sensor based on a result of the preliminary imaging operation.

6. The self-service POS terminal according to any one of claims 1 to 5, further comprising:
a detector configured to detect a presence of a person,
wherein the processor determines that the imaging target is within the predetermined range of the image sensor based on an output of the detector.

7. The self-service POS terminal according to any one of claims 1 to 6, wherein
the processor detects an input indicating an end of the imaging operation and causes the light source to turn off upon detecting the input.

8. A method of operating a light source of a self-service point-of-sale (POS) terminal, that turns on while imaging an object using an image sensor, comprising:
controlling the light source to blink;
determining whether or not the object is within a predetermined range of the image sensor; and
when the object is determined to be within the predetermined range of the image sensor, controlling the light source to remain turned on without blinking.

9. The method according to claim 8, further comprising:
detecting an input indicating a start of an imaging operation using the image sensor,
wherein the light source is controlled to start blinking upon detecting the input.

10. The method according to claim 8 or 9, further comprising:
imaging the object using the image sensor after the light source remains turned on without blinking.

11. The method according to any one of claims 8 to 10, further comprising:
detecting a distance of the object from the image sensor,
wherein the object is determined to be within the predetermined range of the image sensor based on the detected distance.

12. The method according to any one of claims 8 to 11, further comprising:
performing a preliminary imaging operation on the object while the light source is blinking,
wherein the object is determined to be within the predetermined range of the image sensor based on a result of the preliminary imaging operation.

13. The method according to any one of claims 8 to 12, further comprising:
detecting a presence of a person,
wherein the object is determined to be within the predetermined range of the image sensor based on the detected presence of the person.

14. The method according to any one of claims 8 to 13, further comprising:
detecting an input indicating an end of the imaging operation; and
controlling the light source to turn off upon detecting the input.

15. A non-transitory computer readable medium comprising instructions executable in a processor of a self-service point-of-sale (POS) terminal that includes an image sensor and a light source that turns on while imaging an object using the image sensor, wherein the instructions when executed in the processor perform the method according to any one of claims 8 to 14.
